# EUROPÄISCHE PATENTSCHRIFT

(11) **EP 4 110 652 B1**
(45) Veröffentlichungstag und Bekanntmachung des Hinweises auf die Patenterteilung: **31.12.2025**
(21) Anmeldenummer: 21705125.9
(22) Anmeldetag: 09.02.2021
(51) Int. Cl.: B60R 7/02, B60R 5/04

(54) **FAHRZEUG MIT EINEM KOFFERRAUM**
VEHICLE HAVING A TRUNK
VÉHICULE AYANT UN TRONC

(30) Priorität: 26.02.2020 DE 102020202444
(43) Veröffentlichungstag der Anmeldung: 04.01.2023
(73) Patentinhaber: Stellantis Auto SAS, 78300 Poissy (FR)
(72) Erfinder: RUCHNEWITZ, Stephan, 65428 Rüsselsheim am Main (DE); WOYNA, Lars, 65428 Rüsselsheim am Main (DE)
(74) Vertreter: BCIP
(86) Internationale Anmeldenummer: PCT/EP2021/053076
(87) Internationale Veröffentlichungsnummer: WO 2021/170393

(56) Entgegenhaltungen:
- DE-A1- 102013 202 655
- DE-A1- 102014 215 813
- DE-A1- 102022 203 877

## Beschreibung

### Technisches Gebiet:

Die Erfindung betrifft ein Fahrzeug mit einem Kofferraum mit den Merkmalen des Anspruchs 1.

### Hintergrund:

Es bestehen Bestrebungen, ein Volumen eines Kofferraums eines Fahrzeugs zu vergrößern und voll nutzbar zu machen. Hierzu werden zum Beispiel Behälter in dem Kofferraum integriert, in denen Gegenstände verstaut werden können. Bekannt ist es bereits, den Behälter so in das Fahrzeug zu integrieren, dass er von dem Kofferraum aus und von einem Fahrgastraum des Fahrzeugs aus, z.B. durch ein Umklappen einer Rückenlehne eines Rücksitzes des Fahrzeugs zugreifbar ist.

Beispielsweise beschreibt die Druckschrift DE 41 02 646 A1 ein Kraftfahrzeug, in dem zwischen Kofferraum und Fondsitz ein Stauraum zum Durchladen sperriger Güter enthalten ist, der sich nach vorn durch den Fondsitz erstreckt und eine Verbindung zwischen dem Kofferraum und dem Innenraum des Kraftfahrzeugs bildet.

Aus dem Stand der Technik sind ferner die DE 10 2013 202655 A1 und die DE 10 2014 215813 A1 bekannt. Die DE 10 2013 202655 A1 offenbart ein Fahrzeug mit einem Kofferraum nach dem Oberbegriff von Anspruch 1.

### Beschreibung:

Einer Ausführungsform der Erfindung liegt die Aufgabe zugrunde, ein Fahrzeug mit einem vergrößerten, voll nutzbaren und flexibel zugreifbaren Kofferraum bereitzustellen. Diese und weitere Aufgaben werden durch ein Fahrzeug mit den Merkmalen des Anspruchs 1 gelöst. Ausführungsformen der Erfindung ergeben sich aus den Unteransprüchen, der nachfolgenden Beschreibung und/oder den beigefügten Figuren.

Es wird ein Fahrzeug, insbesondere ein Pkw, mit einem Kofferraum vorgeschlagen. Der Kofferraum weist einen Kofferraumunterbau auf. Beispielsweise ist der Kofferraumunterbau durch eine fahrzeugseitig angeordnete Karosseriestruktur mit Bodenstrukturen und/oder mit Bodenunebenheiten, zum Beispiel mit mindestens einem Querträger, gebildet. Der Kofferraumunterbau begrenzt den Kofferraum nach unten zu einem Untergrund. Optional kann in dem Kofferraumunterbau eine Reserveradwanne integriert sein.

Bevorzugt weist das Fahrzeug mindestens einen Rücksitz und eine Laderampe auf. Der mindestens eine Rücksitz begrenzt den Kofferraum in eine Fahrtrichtung des Fahrzeugs. Die Laderampe begrenzt den Kofferraum in eine Gegenrichtung zu der Fahrtrichtung. Vorzugsweise weist der Kofferraum Seitenwände auf, welche den Kofferraum seitlich, insbesondere quer zu der Fahrtrichtung begrenzen. Optional ergänzend weist der Kofferraum Seitenverkleidungsteile auf, welche die Seitenwände verkleiden. Optional ergänzend weist der Kofferraum mindestens eine Unterbauverkleidung auf, welche den Kofferraumunterbau verkleidet und/oder bedeckt.

Der Kofferraum umfasst erfindungsgemäß einen einstückigen Ladeboden, welcher horizontal anordenbar oder angeordnet ist. Vorzugsweise ist der Ladeboden zwischen dem mindestens einen Rücksitz und der Laderampe angeordnet. Der Ladeboden ist von einer oberen Position in eine untere Position überführbar, insbesondere verstellbar. Hierzu ist der Ladeboden beispielsweise zumindest teilweise aus dem Kofferraum entnehmbar und zwischen den beiden Positionen versetzbar. Insbesondere kann der Ladeboden die obere Position oder die untere Position einnehmen. In der oberen Position ist der Ladeboden vorzugsweise beabstandet von dem Kofferraumunterbau, insbesondere beabstandet über dem Kofferraumunterbau, angeordnet. Beispielsweise ist der Ladeboden in der oberen Position im Wesentlichen auf Höhe der Laderampe und/oder fluchtend mit dieser angeordnet. Insbesondere ist der Ladeboden in der unteren Position unterhalb der Laderampe angeordnet. Im Speziellen bedeckt der Ladeboden in der unteren Position die optional vorhandene Reserveradwanne.

Der Kofferraum umfasst einen Behälter. Beispielsweise ist der Behälter quaderförmig ausgebildet. Der Behälter ist erfindungsgemäß als separates eigenständiges Bauteil ausgebildet.

Der Behälter weist mindestens einen Deckel auf. Der mindestens eine Deckel ist auf dem Behälter angeordnet und/oder anordenbar. Bevorzugt ist der Deckel von einem geschlossenen Zustand in einen geöffneten Zustand überführbar. Gemäß der Erfindung weist der Behälter einen Behälterboden auf. Optional steht der Behälter mit dem Behälterboden auf einer Unterlage auf. Insbesondere ist der Behälterboden gegenüberliegend zu dem Deckel angeordnet.

Möglich ist es im Rahmen der Erfindung, dass ein Zugriff auf den mindestens einen Deckel rücksitzseitig und laderampenseitig möglich ist, um den Deckel von dem geschlossenen Zustand in den geöffneten Zustand zu überführen und um den Behälter nutzen zu können. Der rücksitzseitige Zugriff bedeutet insbesondere, dass der Zugriff von dem mindestens einen Rücksitz aus, insbesondere durch Umklappen einer Rückenlehne des mindestens einen Rücksitzes möglich ist. Das Umklappen der Rückenlehne kann zum Beispiel von einem Fahrgastraum des Fahrzeugs aus oder durch eine geöffnete Hintertür des Fahrzeugs erfolgen. Der laderampenseitige Zugriff bedeutet, dass der Zugriff von der Laderampe aus, insbesondere durch eine geöffnete Heckklappe des Fahrzeugs hindurch, erfolgt.

Insbesondere in dem geschlossenen Zustand ist der mindestens eine Deckel etwa auf Höhe des Ladebodens in der oberen Position angeordnet. Vorzugsweise ist der Deckel auf Höhe oder im Wesentlichen auf Höhe des Ladebodens in der oberen Position, insbesondere fluchtend oder im Wesentlichen fluchtend mit dem Ladeboden in der oberen Position angeordnet. Insbesondere ist der mindestens eine Deckel in dem geschlossenen Zustand auf Höhe oder im Wesentlichen auf Höhe der Laderampe angeordnet.

Vorteilhaft ist, dass der Ladeboden in der oberen Position durch den mindestens einen Deckel in dem geschlossenen Zustand verlängert wird und dass dadurch eine Ladefläche zum Beladen mit Ladegut vergrößert ist. Die für den Anwender nutzbare Kofferraumfläche ist dann die Fläche des Ladebodens in seiner oberen Position und der Fläche des Deckels. Weiterhin ist es von Vorteil, dass in dem mit dem Deckel verschließbaren Behälter Gegenstände sicher und rutschfrei in dem Fahrzeug mitgeführt werden können. Dadurch dass der Deckel in dem geschlossenen Zustand fluchtend mit dem Ladeboden in der oberen Position angeordnet ist, ist der Behälter unauffällig oder sogar weitestgehend unsichtbar in dem Kofferraum integriert. Der Behälter bietet dadurch zum Beispiel einen sicheren Aufbewahrungsraum für Wertgegenstände.

In einer möglichen Ausführungsform der Erfindung ist der Ladeboden in der unteren Position auf dem Kofferraumunterbau angeordnet. Insbesondere liegt der Ladeboden in der unteren Position auf dem Kofferraumunterbau auf. Vorzugsweise ist der Behälterboden auf dem Kofferraumunterbau angeordnet. Bevorzugt steht der Behälter mit dem Behälterboden auf dem Kofferraumunterbau als die Unterlage auf. Somit erstrecken sich der Behälterboden und der Ladeboden, wenn er in der unteren Position angeordnet ist, im Wesentlichen auf gleicher Höhe und/oder fluchtend zueinander.

Es ist weiterhin im Rahmen der Erfindung möglich, dass der Behälter in Fahrtrichtung vorne in dem Kofferraum angeordnet ist. Beispielsweise ist zwischen dem mindestens einen Rücksitz und dem Ladeboden ein Abstandsbereich angeordnet. Der Abstandsbereich kann dadurch gebildet sein, dass der Ladeboden eine sich in die Fahrtrichtung erstreckende Länge aufweist, die kürzer ist als eine sich in die Fahrtrichtung erstreckende Länge des Kofferraums. Bevorzugt ist es im Rahmen der Erfindung, dass der Ladeboden an der Ladekante angrenzt und/oder sich von dieser aus in die Fahrtrichtung erstreckt. Vorzugsweise ist der Behälter in dem Abstandsbereich angeordnet. Insbesondere füllt der Behälter den Abstandsbereich bevorzugt vollständig aus. Im Speziellen ist der Behälter zwischen dem mindestens einen Rücksitz und dem Ladeboden angeordnet, wobei er zumindest den Ladeboden, bevorzugt den Rücksitz und den Ladeboden, kontaktiert.

In einer möglichen konstruktiven Ausgestaltung der Erfindung ist eine Oberseite des auf dem Behälter aufliegenden Deckels auf gleicher Höhe wie eine Oberseite des Ladebodens in seiner oberen Position angeordnet. Vorzugsweise fluchtet die Oberseite des Deckels in dem geschlossenen Zustand mit der Oberseite des Ladebodens. Insbesondere verlängert der Deckel in dem geschlossenen Zustand den Ladeboden in der oberen Position in die Fahrtrichtung des Fahrzeugs. Dies hat den Vorteil, dass von der Ladekante aus eine bis zu dem mindestens einen Rücksitz reichende durchgängige und/oder unterbrechungsfreie Ladefläche bereitgestellt werden kann, welche durch den Ladeboden und den Deckel in dem geschlossenen Zustand gebildet ist.

In einer möglichen Ausführungsform der Erfindung ist der Deckel lose auf den Behälter aufgelegt. Insbesondere kann der Deckel in jede Richtung, z.B. in die Fahrtrichtung, in die Gegenrichtung und zu beiden quer zu der Fahrtrichtung gerichteten Seiten geöffnet werden. Alternativ oder optional ergänzend ist der mindestens eine Deckel vollständig von dem Behälter abnehmbar. Hierfür ist der Deckel insbesondere beschädigungsfrei lösbar an dem Behälter befestigbar und/oder befestigt. Beispielsweise kann der Deckel mit dem Behälter über mindestens einen Magneten oder über mindestens ein Klettband oder Klettpad verbunden sein. Dadurch dass der Deckel lose auf den Behälter aufgelegt ist und/oder vollständig von dem Behälter abnehmbar ist, kann der Behälter von allen Seiten geöffnet und ein Zugriff auf den Behälter von allen Seiten ermöglicht werden. Insbesondere kann der Behälter flexibel und ohne Einschränkung verwendet werden.

In einer möglichen konstruktiven Umsetzung der Erfindung weist der mindestens eine Deckel mindestens eine Öffnung zum Eingriff mit einem Finger zur Überführung des Deckels von dem geschlossenen Zustand in den geöffneten Zustand auf. Alternativ oder optional ergänzend weist der Deckel mindestens einen Griff zur Überführung des Deckels von dem geschlossenen Zustand in den geöffneten Zustand auf. Der Griff kann beispielsweise als eine Griffmulde, Schlaufe oder als ein Bügel ausgebildet sein.

Vorzugsweise ist der die mindestens eine Öffnung und/oder der mindestens eine Griff von der Laderampe aus betätigbar. Insbesondere ist/sind die mindestens eine Öffnung und/oder der mindestens eine Griff zur laderampenseitigen Überführung des Deckels von den geschlossenen Zustand in den geöffneten Zustand vorgesehen. Im Speziellen ist der laderampenseitige Zugriff auf den Behälter über die mindestens eine Öffnung und/oder über den mindestens einen Griff möglich. Beispielsweise kann der Deckel laderampenseitig in die Fahrtrichtung, zu der ersten und/oder zu der zweiten Seite aufgeklappt oder vollständig abgenommen werden.

Eine weitere mögliche konstruktive Umsetzung der Erfindung sieht vor, dass in den Seitenverkleidungsteilen des Kofferraums mindestens eine Aussparung zum Eingriff mit dem Finger zur Überführung des Deckels von dem geschlossenen Zustand in den geöffneten Zustand eingebracht ist. Die mindestens eine Aussparung ermöglicht es insbesondere den Deckel von der Seite zugreifen und von dem geschlossenen Zustand in den geöffneten Zustand zu überführen.

Möglich ist es im Rahmen der Erfindung, dass der Deckel einen weiteren Griff aufweist, wobei der weitere Griff von der mindestens einen Aussparung in den Seitenverkleidungsteilen aus gut erreichbar ist, um den mindestens einen Deckel von dem geschlossenen Zustand in den geöffneten Zustand zu überführen. Insbesondere erleichtert der mindestens eine weitere Griff das Öffnen des Deckels über die mindestens eine Aussparung in den Seitenverkleidungsteilen.

Vorzugsweise ist/sind die mindestens eine Aussparung in den Seitenverkleidungsteilen und/oder oder der mindestens eine weitere Griff zur rücksitzseitigen Überführung des Deckels von dem geschlossenen Zustand in den geöffneten Zustand vorgesehen. Insbesondere ist der rücksitzseitige Zugriff auf den Behälter über die mindestens eine Aussparung und/oder über den mindestens einen weiteren Griff möglich. Beispielsweise kann der Deckel über die mindestens eine Aussparung und/oder über den mindestens einen weiteren Griff zu einer Seite oder in die Gegenrichtung geöffnet, insbesondere aufgeklappt werden oder vollständig abgenommen werden.

In einer möglichen konstruktiven Umsetzung der Erfindung weist der Behälter eine sich quer zu der Fahrtrichtung erstreckende Länge auf, wobei die Länge des Behälters einer sich quer zu der Fahrtrichtung erstreckenden Breite des Kofferraums entspricht oder im Wesentlichen entspricht. Insbesondere erstreckt sich der Behälter der Länge nach nahezu oder vollständig über die gesamte Breite des Kofferraums. Damit kann in vorteilhafter Weise eine Breite des Abstandsbereichs bestmöglich ausgenutzt werden.

Erfindungsgemäß ist der Behälterboden an die Bodenstrukturen und/oder -unebenheiten des Kofferraumunterbaus angepasst. Alternativ oder optional ergänzend umgibt der Behälterboden die Bodenstrukturen und/oder -unebenheiten formschlüssig. Dadurch kann erreicht werden, dass der Behälter sicher, kipp- und/oder rutschfrei auf dem Kofferraumunterbau aufsteht und den zur Verfügung stehenden Raum zwischen den Bodenstrukturen und/oder -unebenheiten bestmöglich ausnutzt. Ein nicht nutzbares Totvolumen zwischen dem Behälterboden und dem Kofferraumunterbau kann dadurch vermieden werden.

In einer möglichen Ausführungsform der Erfindung weist der Behälter mehrere Deckel, zum Beispiel zwei, drei oder vier Deckel auf. Vorzugsweise sind die Deckel der Länge des Behälters nach aufeinanderfolgend angeordnet. Insbesondere sind die Deckel unabhängig voneinander in den geschlossenen Zustand oder in den geöffneten Zustand überführbar. Durch die Bereitstellung der mehreren Deckel können in dem Behälter mehrere Fächer bereitgestellt werden, in denen Gegenstände getrennt voneinander aufbewahrt werden können. Vorteilhaft ist auch, dass ein Zugriff auf dem Behälter und/oder die Überführung des jeweiligen Deckels von dem geschlossenen Zustand in den geöffneten Zustand erleichtert wird, da jeder der Deckel von der für ihn am leichtesten zugänglichen Seite des Fahrzeugs, zum Beispiel von einer rechten oder linken Hintertür und einem jeweils zugeordneten Rücksitz aus erreichbar ist. Besonders vorteilhaft ist es, wenn die Fächer in dem Behälter gleich groß sind und die Deckel damit als Gleichteile ausgebildet sein können. Dadurch können eine Bauteileanzahl und Herstellungskosten reduziert werden.

Weitere Merkmale, Vorteile und Wirkungen der Erfindung ergeben sich aus der nachfolgenden Beschreibung bevorzugter Ausführungsbeispiele der Erfindung. Dabei zeigen:
Figur 1 eine Draufsicht von der Seite auf einen Kofferraum eines Fahrzeugs nach Stand der Technik;
Figur 2 eine Draufsicht von der Seite auf einen Kofferraum eines Fahrzeugs;
Figur 3 der Kofferraumanordnung aus der Figur 2 in einer Draufsicht von oben;
Figuren 4a-d ein Behälter des Kofferraums mit einem Deckel in unterschiedlichen Stellungen.

Einander entsprechende oder gleiche Teile sind in den Figuren jeweils mit den gleichen Bezugszeichen versehen.

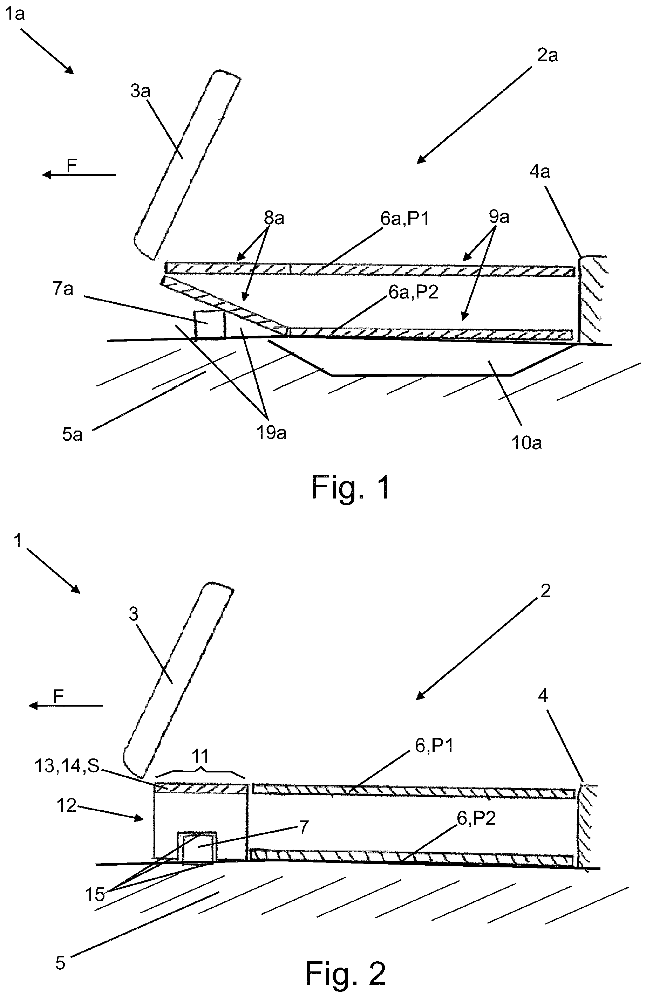

In der Figur 2 ist eine seitliche Draufsicht auf einen Kofferraum 1 eines Fahrzeugs, zum Beispiel eines PKWs gezeigt.

Das Fahrzeug umfasst mindestens einen Rücksitz, von dem nur mindestens eine Rückenlehne 3 in der Figur 2 gezeigt ist. Die Rückenlehne 3 kann in eine Fahrtrichtung F des Fahrzeugs umgelegt werden. Das Fahrzeug weist eine Laderampe 4 und einen Kofferraumunterbau 5 auf.

Der Kofferraum 1 ist in die Fahrtrichtung F durch den mindestens einen Rücksitz begrenzt. In eine Gegenrichtung zu der Fahrtrichtung F ist der Kofferraum 1 durch die Laderampe 4 begrenzt. Nach unten, insbesondere zu einem Untergrund, auf dem das Fahrzeug aufsteht, ist der Kofferraum 1 durch den Kofferraumunterbau 5 begrenzt. Der Kofferraumunterbau 5 umfasst einen Querträger 7, welcher sich quer zu der Fahrtrichtung F erstreckt. In dem Kofferraum 1 kann Ladegut eingeladen und während der Fahrt mit dem Fahrzeug mitgeführt werden.

Der Kofferraum 1 umfasst einen Ladeboden 6. Der Ladeboden 6 ist einstückig ausgebildet.

Der Ladeboden 6 ist in der Figur 2 in einer oberen Position P1 und in einer unteren Position P2 gezeigt. Der Ladeboden 6 ist von der oberen Position P1 in die untere Position P2 verstellbar, zum Beispiel indem er zunächst angehoben und anschließend in die gewünschte Position P1, P2 versetzt wird. Somit kann der Ladeboden 6 entweder die obere Position P1 oder die untere Position P2 einnehmen.

In der oberen Position P1 ist der Ladeboden 6 beabstandet von dem Kofferraumunterbau 5 angeordnet und erstreckt sich im Wesentlichen auf Höhe der Laderampe 4.

Der Ladeboden 6 ist zwischen dem mindestens einen Rücksitz und der Laderampe 6 angeordnet. Zwischen dem Rücksitz und dem Ladeboden 6 ist ein Abstandsbereich 11 angeordnet.

Der Kofferraum 1 weist einen Behälter 12 zur Aufnahme von Gegenständen auf. Der Behälter 12 ist in dem Kofferraum 1 in Fahrtrichtung F vorne angeordnet. Er ist in dem Abstandsbereich 11 zwischen dem mindestens einen Rücksitz und dem Ladeboden 6 platziert. Der Behälter 12 grenzt im Wesentlichen an den Rücksitz und an eine in die Fahrtrichtung F gerichtete Kante des Ladebodens 6 an, unabhängig davon, ob der Ladeboden 6 die obere Position P1 oder die untere Position P2 einnimmt.

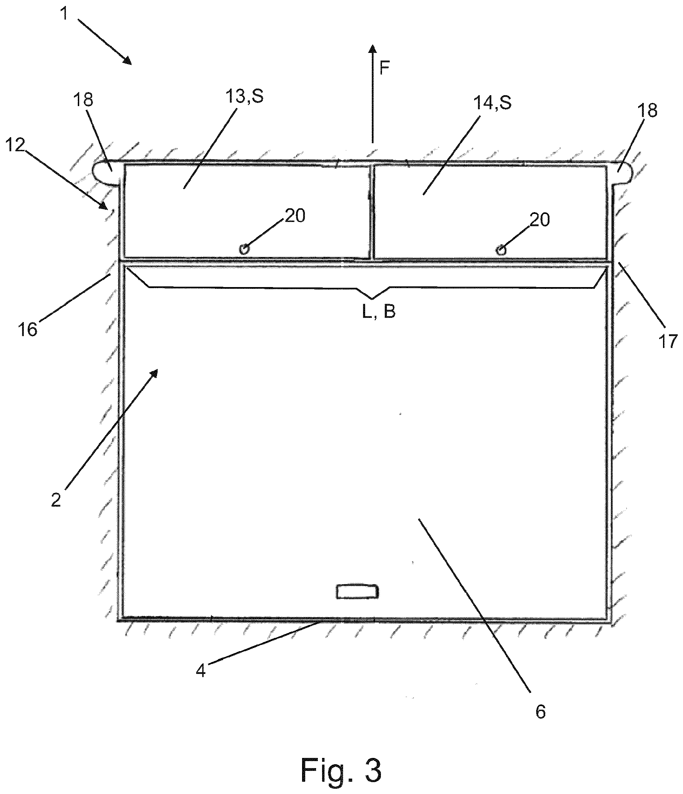

Der Behälter 12 umfasst mindestens einen Deckel, z.B. zwei nebeneinander und/oder benachbart zueinander angeordnete Deckel 13, 14 (Fig. 3). In dem Behälter 12 können wie es beispielhaft in der Figur 3 gezeigt ist, zwei nebeneinander und/oder benachbart zueinander angeordnete Fächer vorgesehen sein, wobei jeweils ein Fach von einem der Deckel 13, 14 bedeckt ist. Alternativ kann der Behälter 12 auch nur ein einziges Fach mit mehreren, z.B. zwei Deckeln, 12, 14 umfassen.

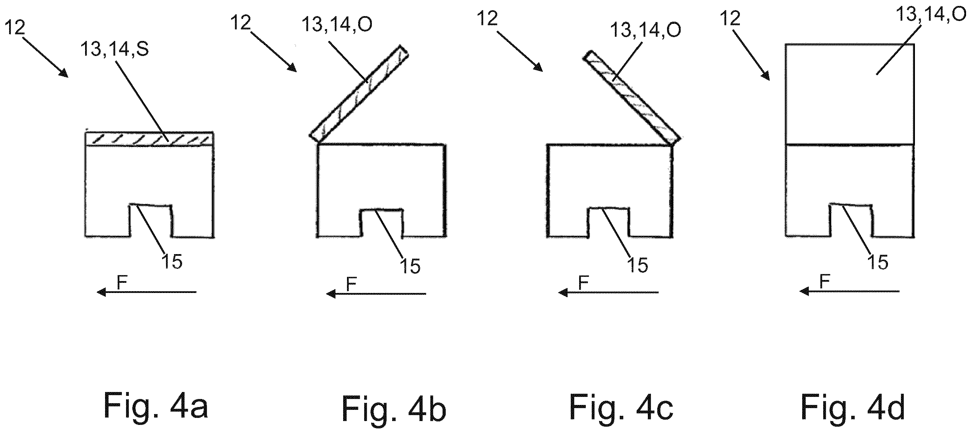

Die Deckel 13, 14 sind von einem geschlossenen Zustand S gemäß der Figur 4a in einen geöffneten Zustand O gemäß den Figuren 4b-4d überführbar. Wie aus der Figur 3 zu entnehmen, sind die Deckel 13, 14 in dem geschlossenen Zustand S auf Höhe des Ladebodens 6 in der oberen Position P1 und/oder auf Höhe der Laderampe 4 angeordnet. Die in dem geschlossenen Zustand S befindlichen Deckel 13, 14 fluchten mit dem Ladeboden 6 in der oberen Position P1. Dadurch ist der Ladeboden 6 und die durch den Ladeboden 6 gebildete Ladefläche für Ladegut in die Fahrtrichtung F vergrößert, insbesondere verlängert. Der Behälter 12 ist somit unauffällig oder sogar weitestgehend unsichtbar in den Kofferraum 2 integriert, sodass auch Wertgegenstände sicher im Fahrzeug mitgeführt und verstaut werden können.

Der Behälter 12 weist einen Behälterboden 15 auf, welcher den Deckeln 13, 14 gegenüberliegt. Der Behälterboden 15 ist auf Höhe des Ladebodens 6 in der unteren Position P2 angeordnet. Der Behälter 12 steht mit dem Behälterboden 15 auf dem Kofferraumunterbau 5 auf. Der Behälterboden 15 ist an den Kofferraumunterbau, insbesondere an den Querträger 7 und optional ergänzend an weitere Bodenstrukturen und/oder -unebenheiten angepasst. Der Behälterboden 15 ist so geformt, dass er den Querträger 7 formschlüssig umgibt. Dadurch füllt der Behälter 12 den zur Verfügung stehenden Raum rund um den Querträger 7 voll aus. Gegenstände wie Werkzeug, Warnweste und Warndreieck können in dem Behälter 12 verstaut werden und müssen nicht mehr anderweitig, z.B. in eine schwer zugänglichen Reserveradmulde angeordnet werden, welche z.B. in dem Kofferraumunterbau 5 integriert sein kann.

In der Figur 3 ist eine Draufsicht von oben auf den Kofferraum 1 mit dem Ladeboden 6 und mit dem Behälter 12 gezeigt. Der Ladeboden 6 weist einen Handeingriff auf, mittels dem der Ladeboden 6 angehoben, aus dem Kofferraum 2 entfernt oder von der oberen Position P1 in die untere Position P2 oder umgekehrt positioniert werden kann.

Der Behälter 12 ist quaderförmig ausgebildet. Er weist eine Länge L auf, die einer Breite B des Kofferraums 2 entspricht oder im Wesentlichen entspricht. Somit füllt der Behälter 12 den Abstandsbereich 11 zwischen dem mindestens einen Rücksitz und der Ladekante 4 vollständig oder im Wesentlichen vollständig aus. Dies hat den Vorteil, dass die Gegenstände in dem Behälter 12 verstaut werden können und der Kofferraum 2 dennoch großvolumig wirkt.

Jeder der beiden Deckel 13, 14 weist eine Öffnung 20 auf, die als ein Fingereingriff zur Betätigung des jeweiligen Deckels 13, 14 ausgebildet ist. Alternativ oder optional ergänzend kann auch ein Griff pro Deckel 13, 14 vorgesehen sein. Die Öffnung 20 ist in jedem Deckel 13, 14 in die Gegenrichtung zu der Fahrtrichtung F gerichtet, sodass die Deckel 13, 14 laderampenseitig, insbesondere von der Laderampe 4 durch eine geöffnete Heckklappe des Fahrzeugs aus, einfach zugreifbar und von dem geschlossenen Zustand S in den geöffneten Zustand O überführbar ist.

Der Kofferraum 1 weist Seitenwände und hierfür vorgesehene Seitenverkleidungsteile 16, 17 auf. Die Seitenwände begrenzen den Kofferraum 1 zu beiden quer zu der Fahrtrichtung F gerichteten Seiten. Die Seitenverkleidungsteile 16, 17 verkleiden die Seitenwände. In jedem Seitenverkleidungsteil 16, 17 ist eine Aussparung 18 eingebracht. Die Aussparung 18 ist dazu vorgesehen, einen Eingriff mit der Hand oder einem Finger zu ermöglichen um den jeweils dem Seitenverkleidungsteil 16, 17 benachbarten Deckel 13, 14 von der Seite zu greifen und zu öffnen. An dem Deckel 13, 14 kann ein weiterer Griff zum besseren Greifen vorgesehen sein.

Über die Aussparungen 18 in den Seitenverkleidungsteilen 16, 17 ist ein rücksitzseitiger Zugriff auf den Behälter 12 und die Deckel 13, 14, insbesondere ein Zugriff von dem mindestens einen Rücksitz bei umgeklappter Rückenlehne 3 aus, möglich. Der rücksitzseitige Zugriff ist insbesondere dann gewährleistet, wenn eine Hintertür des Fahrzeugs geöffnet ist und die Rückenlehne 3 des auf der gleichen Fahrzeugseite angeordneten Rücksitzes umgeklappt ist.

In der Figur 4a ist eine quer zu der Fahrtrichtung F gerichtete, seitliche Draufsicht auf den Behälter 12 mit dem mindestens einen Deckel 13, 14 in dem geschlossenen Zustand S gezeigt. Der mindestens eine Deckel 13, 14 ist lose auf den Behälter 12 aufgelegt oder er ist beschädigungsfrei abnehmbar an diesem befestigt. Die Befestigung des Deckels 13, 14 kann z.B. magnetisch oder per Klettverschluss umgesetzt sein.

Diese Art der Befestigung des Deckels 13, 14 oder das lose Auflegen des Deckels 13, 14 ermöglicht ein vollständiges Entfernen des Deckels 13, 14 oder ein flexibles Öffnen zu unterschiedlichen Seiten bzw. in unterschiedliche Richtungen. Insbesondere kann der mindestens eine Deckel 13, 14 rücksitzseitig und/oder laderampenseitig geöffnet werden.

Gemäß der Figur 4b ist der mindestens eine Deckel 13, 14 laderampenseitig betätigt und in die Fahrtrichtung F aufgeklappt. Er nimmt den geöffneten Zustand O ein. Gemäß der Figur 4c ist der mindestens eine Deckel 13, 14 rücksitzseitig betätigt und in die Gegenrichtung aufgeklappt, sodass er den geöffneten Zustand S aufweist. Die Figur 4d zeigt den mindestens einen Deckel 13, 14 wie er zur Seite, also quer zu der Fahrtrichtung F, aufgeklappt ist und den geöffneten Zustand O einnimmt.

### Bezugszeichenliste:

- 1: Kofferraum
- 3: Rückenlehne
- 4: Laderampe
- 5: Kofferraumunterbau
- 6: Ladeboden
- 7: Querträger
- 11: Abstandsbereich
- 12: Behälter
- 13: erster Deckel
- 14: zweiter Deckel
- 15: Behälterboden
- 16: erstes Seitenverkleidungsteil
- 17: zweites Seitenverkleidungsteil
- 18: Aussparungen
- 20: Öffnung
- F: Fahrtrichtung
- O: geöffneter Zustand
- P1: obere Position
- P2: untere Position
- S: geschlossener Zustand

## Patentansprüche

1. Fahrzeug mit einem Kofferraum (1),
wobei der Kofferraum (1) einen horizontal anordenbaren Ladeboden (6) aufweist, welcher von einer oberen Position (P1) in eine untere Position (P2) überführbar ist,
wobei der Kofferraum (1) einen Behälter (12) mit einem Behälterboden (15) umfasst, welcher mindestens einen
darauf anordenbaren Deckel (13, 14) besitzt,
wobei der mindestens eine Deckel (13, 14) etwa auf Höhe des Ladebodens (6) in der oberen Position (P1) angeordnet ist,
wobei eine Oberseite des Ladebodens (6) in der unteren Position (P2) etwa auf gleicher Höhe wie eine Unterseite des Behälterbodens (15) angeordnet ist. **dadurch gekennzeichnet,**
**dass** ein einstückiger Ladeboden (6) vorgesehen ist,
**dass** der Behälter (12) als ein separates eigenständiges Bauteil ausgebildet ist und den Behälterboden (15) besitzt, und
**dass** der Kofferraum (1) einen Kofferraumunterbau (5) mit Bodenstrukturen und/oder -unebenheiten (7) umfasst, wobei der Behälterboden (15) an die Bodenstrukturen und/oder -unebenheiten (7) angepasst ist und/oder die Bodenstrukturen und/oder -unebenheiten (7) formschlüssig umgibt.

2. Fahrzeug nach Anspruch 1, **dadurch gekennzeichnet, dass** der Behälter (12) in Fahrtrichtung (F) vorne in dem Kofferraum (1) angeordnet ist.

3. Fahrzeug nach einem der vorhergehenden Ansprüche, **dadurch gekennzeichnet, dass** eine Oberseite des auf dem Behälter (12) aufliegenden Deckels (13, 14) auf gleicher Höhe angeordnet ist wie eine Oberseite des Ladebodens (6) in der oberen Position (P1).

4. Fahrzeug nach einem der vorhergehenden Ansprüche, **dadurch gekennzeichnet, dass** der Deckel (13, 14) lose auf den Behälter (12) aufgelegt ist und/oder von dem Behälter (12) vollständig abnehmbar ist.

5. Fahrzeug nach einem der vorhergehenden Ansprüche, **dadurch gekennzeichnet, dass** der Deckel (13, 14) über mindestens einen Magneten oder über mindestens ein Klettband oder Klettpad lösbar an dem Behälter (12) befestigt und/oder befestigbar ist.

6. Fahrzeug nach einem der vorhergehenden Ansprüche, **dadurch gekennzeichnet, dass** der Deckel (13, 14) mindestens eine Öffnung (20) zum Eingriff mit einem Finger und/oder mindestens einen Griff zur Überführung des Deckels (13, 14) von einem geschlossenen Zustand (S) in den geöffneten Zustand (O) aufweist.

7. Fahrzeug nach Anspruch 6, **dadurch gekennzeichnet, dass** das Fahrzeug eine Laderampe (4) umfasst, wobei die Öffnung (20) und/oder der Griff dazu ausgebildet ist, von der Laderampe (4) aus betätigt zu werden, um den Deckel (13, 14) von dem geschlossenen Zustand (S) in den geöffneten Zustand (O) zu überführen.

8. Fahrzeug nach einem der vorhergehenden Ansprüche, **dadurch gekennzeichnet, dass** der Kofferraum (1) Seitenverkleidungsteile (16,17) umfasst, wobei in den Seitenverkleidungsteilen (16, 17) mindestens eine Aussparung (18) zum Eingriff mit einem Finger zur Überführung des mindestens einen Deckels (13, 14) von dem geschlossenen Zustand (S) in den geöffneten Zustand (O) eingebracht sind.

9. Fahrzeug nach Anspruch 81, **dadurch gekennzeichnet, dass** der Deckel (13, 14) einen weiteren Griff aufweist, wobei der weitere Griff von der mindestens einen Aussparung (18) aus greifbar und betätigbar ist, um den mindestens einen Deckel (13, 14) von dem geschlossenen Zustand (S) in den geöffneten Zustand (O) zu überführen.

10. Fahrzeug nach Anspruch 8 oder 9, **dadurch gekennzeichnet, dass** das Fahrzeug mindestens einen Rücksitz mit mindestens einer umklappbaren Rückenlehne (3) umfasst, wobei die mindestens eine Aussparung (18) und/oder der weitere Griff dazu ausgebildet ist, von der umgeklappten Rückenlehne (3) aus betätigt zu werden, um den Deckel (13, 14) von dem geschlossenen Zustand (S) in den geöffneten Zustand (O) zu überführen.

11. Fahrzeug nach einem der vorhergehenden Ansprüche, **dadurch gekennzeichnet, dass** der Behälter (12) im Wesentlichen quaderförmig ausgebildet ist und/oder eine Länge (L) aufweist, die sich quer zu der Fahrtrichtung (F) erstreckt, wobei die Länge (L) des Behälters (12) einer Breite (B) des Kofferraums (1) entspricht oder im Wesentlichen entspricht, wobei sich die Breite (B) des Kofferraums (1) quer zu der Fahrtrichtung (F) erstreckt.

12. Fahrzeug nach einem der vorhergehenden Ansprüche, **dadurch gekennzeichnet, dass** der Behälter (12) mehrere Deckel (13, 14) aufweist, die der Länge (L) nach aufeinanderfolgend angeordnet sind und unabhängig voneinander in den geöffneten Zustand (O) oder in den geschlossenen Zustand (S) überführbar sind.

## Claims

1. Vehicle with a trunk (1), where the trunk (1) has a horizontally adjustable loading floor (6) which can be moved from an upper position (P1) to a lower position (P2), where the trunk (1) comprises a container (12) with a container base (15) which has at least one lid (13, 14) that can be placed thereon, where the at least one lid (13, 14) is arranged approximately at the level of the loading floor (6) in the upper position (P1), where an upper surface of the loading floor (6) in the lower position (P2) is arranged approximately at the same level as an underside of the container base (15). **characterized in that** a one-piece loading floor (6) is provided, the container (12) is designed as a separate, independent component and has a container base (15), and the trunk (1) comprises a trunk substructure (5) with floor structures and/or irregularities (7), wherein the container base (15) is adapted to the floor structures and/or irregularities (7) and/or positively surrounds the floor structures and/or irregularities (7).

2. Vehicle according to claim 1, **characterized in that** the container (12) is arranged at the front of the trunk (1) in the direction of travel (F).

3. Vehicle according to any one of the preceding claims, **characterized in that** an upper surface of the lid (13, 14) resting on the container (12) is arranged at the same height as an upper surface of the loading floor (6) in the upper position (P1).

4. Vehicle according to any one of the preceding claims, **characterized in that** the lid (13, 14) is loosely placed on the container (12) and/or is completely removable from the container (12).

5. Vehicle according to any one of the preceding claims, **characterized in that** the lid (13, 14) is detachably attached and/or secured to the container (12) by at least one magnet or by at least one hook-and-loop fastener or hook-and-loop pad.

6. Vehicle according to any one of the preceding claims, **characterized in that** the lid (13, 14) has at least one opening (20) for finger engagement and/or at least one handle for moving the lid (13, 14) from a closed state (S) to an open state (O).

7. Vehicle according to claim 6, **characterized in that** the vehicle comprises a loading ramp (4), wherein the opening (20) and/or the handle is designed to be operated from the loading ramp (4) in order to move the lid (13, 14) from the closed state (S) to the open state (O).

8. Vehicle according to any one of the preceding claims, **characterized in that** the trunk (1) comprises side panel parts (16, 17), wherein at least one recess (18) for the engagement of a finger is provided in the side panel parts (16, 17) to move the at least one lid (13, 14) from the closed state (S) to the open state (O).

9. Vehicle according to claim 81, **characterized in that** the cover (13, 14) has a further handle, wherein the further handle is accessible and operable from the at least one recess (18) to move the at least one cover (13, 14) from the closed state (S) to the open state (O).

10. Vehicle according to claim 8 or 9, **characterized in that** the vehicle comprises at least one rear seat with at least one folding backrest (3), wherein the at least one recess (18) and/or the further handle is designed to be operated from the folded-down backrest (3) to move the cover (13, 14) from the closed state (S) to the open state (O).

11. Vehicle according to any one of the preceding claims, **characterized in that** the container (12) is substantially cuboid in shape and/or has a length (L) extending transversely to the direction of travel (F), wherein the length (L) of the container (12) corresponds to or substantially corresponds to the width (B) of the trunk (1), the width (B) of the trunk (1) extending transversely to the direction of travel (F).

12. Vehicle according to any one of the preceding claims, **characterized in that** the container (12) has several lids (13, 14) arranged successively along its length (L) and which can be independently opened (O) or closed (S).

## Revendications

1. Véhicule muni d'un coffre (1), dans lequel le coffre (1) est doté d'un plancher de chargement (6) réglable horizontalement et pouvant être déplacé d'une position haute (P1) à une position basse (P2), dans lequel le coffre (1) comprend un conteneur (12) muni d'un fond (15) comportant au moins un couvercle (13, 14) pouvant y être placé, dans lequel le ou les couvercles (13, 14) sont disposés approximativement au niveau du plancher de chargement (6) en position haute (P1), dans lequel la surface supérieure du plancher de chargement (6) en position basse (P2) est disposée approximativement au même niveau que la face inférieure du fond (15). **Caractérisé en ce que** : un plancher de chargement monobloc (6) est prévu ; le conteneur (12) est conçu comme un composant séparé et indépendant et comporte une base (15) ; le coffre (1) comprend une sous-structure (5) avec des structures et/ou irrégularités de plancher (7), la base (15) étant adaptée aux structures et/ou irrégularités de plancher (7) et/ou les entourant.

2. Véhicule selon la revendication 1, **caractérisé en ce que** le conteneur (12) est disposé à l'avant du coffre (1) dans le sens de la marche (F).

3. Véhicule selon l'une quelconque des revendications précédentes, **caractérisé en ce que** la surface supérieure du couvercle (13, 14) reposant sur le conteneur (12) est disposée à la même hauteur que la surface supérieure du plancher de chargement (6) en position haute (P1).

4. Véhicule selon l'une quelconque des revendications précédentes, **caractérisé en ce que** le couvercle (13, 14) est posé librement sur le récipient (12) et/ou est entièrement amovible du récipient (12).

5. Véhicule selon l'une quelconque des revendications précédentes, **caractérisé en ce que** le couvercle (13, 14) est fixé de manière amovible et/ou maintenu en place sur le récipient (12) par au moins un aimant ou par au moins une bande auto-agrippante.

6. Véhicule selon l'une quelconque des revendications précédentes, **caractérisé en ce que** le couvercle (13, 14) comporte au moins une ouverture (20) pour la préhension et/ou au moins une poignée permettant de faire passer le couvercle (13, 14) de l'état fermé (S) à l'état ouvert (O).

7. Véhicule selon la revendication 6, **caractérisé en ce qu'**il comprend une rampe de chargement (4), l'ouverture (20) et/ou la poignée étant conçues pour être actionnées depuis la rampe (4) afin de déplacer le couvercle (13, 14) de l'état fermé (S) à l'état ouvert (O).

8. Véhicule selon l'une quelconque des revendications précédentes, **caractérisé en ce que** le coffre (1) comprend des panneaux latéraux (16, 17), comportant au moins un évidement (18) destiné à recevoir un doigt pour déplacer le ou les couvercles (13, 14) de l'état fermé (S) à l'état ouvert (O).

9. Véhicule selon la revendication 81, **caractérisé en ce que** le couvercle (13, 14) comporte une poignée supplémentaire, accessible et actionnable depuis au moins un évidement (18) pour déplacer le couvercle (13, 14) de l'état fermé (S) à l'état ouvert (O).

10. Véhicule selon la revendication 8 ou 9, **caractérisé en ce qu'**il comprend au moins un siège arrière doté d'au moins un dossier rabattable (3), le ou les évidesments (18) et/ou la poignée supplémentaire étant conçus pour être actionnés depuis le dossier rabattu (3) afin de déplacer le couvercle (13, 14) de l'état fermé (S) à l'état ouvert (O).

11. Véhicule selon l'une quelconque des revendications précédentes, **caractérisé en ce que** le conteneur (12) est de forme sensiblement parallélépipédique et/ou présente une longueur (L) s'étendant transversalement à la direction de déplacement (F), la longueur (L) du conteneur (12) correspondant ou correspondant sensiblement à la largeur (B) du coffre (1), la largeur (B) du coffre (1) s'étendant transversalement à la direction de déplacement (F).

12. Véhicule selon l'une quelconque des revendications précédentes, **caractérisé en ce que** le conteneur (12) comporte plusieurs couvercles (13, 14) disposés successivement sur sa longueur (L) et pouvant être ouverts (O) ou fermés (S) indépendamment.
